# EUROPEAN PATENT SPECIFICATION

(11) **EP 0 874 028 B1**
(45) Date of publication and mention of the grant of the patent: **11.06.2003**
(21) Application number: 97912450.0
(22) Date of filing: 13.11.1997
(51) Int. Cl.: C09D 11/00, B41J 2/21

(54) **INK COMPOSITION CONTAINING CATIONIC WATER-SOLUBLE RESIN**
TINTEZUSAMMENSETZUNG ENTHALTEND EIN WASSERLÖSLICHES HARZ
COMPOSITION D'ENCRE CONTENANT UNE RESINE CATIONIQUE HYDROSOLUBLE

(30) Priority: 13.11.1996 JP 30222596
(43) Date of publication of application: 28.10.1998
(73) Proprietor: SEIKO EPSON CORPORATION, Shinjuku-ku, Tokyo 163-0811 (JP)
(72) Inventor: KITAMURA, Kazuhiko, Suwa-shi, Nagano 392 (JP); OTA, Hitoshi, Suwa-shi, Nagano 392 (JP); ITO, Hiroshi, Suwa-shi, Nagano 392 (JP)
(74) Representative: Grünecker, Kinkeldey, Stockmair & Schwanhäusser Anwaltssozietät
(86) International application number: JP9704142
(87) International publication number: WO98021283

(56) References cited:
- EP-A- 0 736 582
- JP-A- 8 193 175
- JP-A- 8 269 375
- JP-A- 9 020 070
- US-A- 5 271 765

## Description

### BACKGROUND OF THE INVENTION

### Field of the Invention

The present invention relates to an ink composition suitable for ink jet recording.

### Background Art

It is important for an ink composition to realize an image having good waterproofness and lightfastness and having no significant feathering or bleeding.

In order to realize good waterproofness, for example, a combination of a water-soluble, basic resin with an anionic dye has been used in the art.

For example, Japanese Patent Laid-Open No. 119280/1987 discloses an ink comprising a hydroxyethylated polyethylene-imine polymer and a dye. This publication describes that a combination of the polyethylene-imine with a direct dye, an acid dye, or a reactive dye can develop waterproofness.

Japanese Patent Laid-Open Nos. 255876/1990, 296876/1990, and 188174/1991 disclose an ink composition comprising a polyamine, having a primary amine group, with a molecular weight of not less than 300, an anionic dye, and a stabilizer. These publications describe that the combination of the primary amine with the anionic dye can develop waterproofness.

Japanese Patent Laid-Open No. 305011/1995 discloses a water-base ink comprising a basic, water-soluble polymer, an anionic dye with a volatile base as a counter ion, and a buffer with a volatile base as a counter ion. This publication describes that the volatile base inhibits the dissociation of the polymer in the ink and, on paper, the volatile base is evaporated to promote a salt formation reaction between the polymer and the dye, thereby developing waterproofness.

Japanese Patent Laid-Open No. 238783/1987 discloses an ink jet recording sheet containing a homopolymer of a diallylaminate and a monoallylaminate or a copolymer of the diallylaminate with the monoallylaminate. This publication describes that an insolubilizing reaction between the polymer and the dye is created on this recording medium to develop waterproofness.

On the other hand, lightfastness is another important property required for a printed image. Some of the above ink compositions require a further improvement in lightfastness. For example, the polyethylene-imine polymer strongly attacks the dye, and, for example, when the ink is allowed to stand at a high temperature, this results in decomposition of the dye or accelerates the photodecomposition of the print to often render the lightfastness of the ink lower than that of the ink using the dye alone.

For the printed image, what is further important is to prevent feathering or bleeding, especially color-to-color bleeding in the case where inks of two or more colors are used.

### SUMMARY OF THE INVENTION

We have now found that an ink composition containing a cationic, water-soluble resin having a specific structure can realize an image possessing good waterproofness and lightfastness and having no significant feather or bleeding. The present invention has been made based on such finding.

It is therefore an object of the present invention to provide an ink composition which can yield an image having good waterproofness and lightfastness and having no significant feather or bleeding, especially no significant color-to-color bleeding.

More particularly, it is an object of the present invention to provide an ink composition suitable for ink jet recording.

According to one aspect of the present invention, there is provided an ink composition comprising an alkali-soluble colorant, a water-soluble organic solvent, water, and a cationic, water-soluble resin,
the cationic, water-soluble resin comprising a copolymer of a repeating unit represented by the following formula (I) and/or a repeating unit represented by the following formula (II) and a repeating unit containing a water-soluble group, or a mixture of a polymer, comprising a repeating unit represented by the following formula (I) and/or a repeating unit represented by the following formula (II), with a polymer comprising a repeating unit containing a water-soluble group: 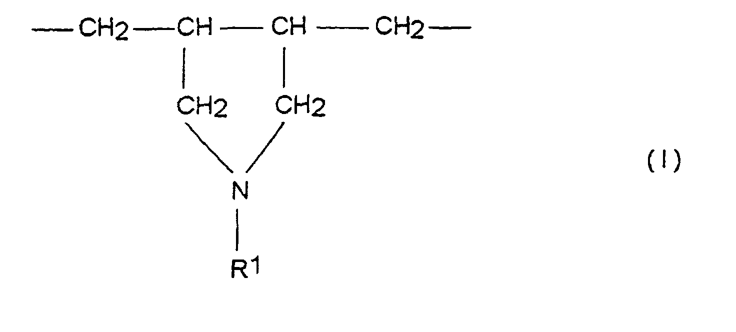 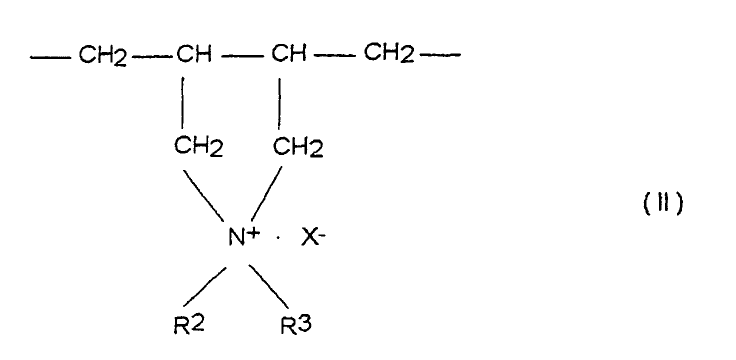 wherein
R¹ represents a hydrogen atom or a C₁₋₃ alkyl group;
R² and R³, which may be the same or different, represent a hydrogen atom, a C₁₋₃ alkyl group, or a hydroxy C₁₋₃ alkyl group; and
X⁻ represents a counter ion;
wherein the content of the water-soluble organic solvent is 5 to 50 % by weight based on the ink composition and the cationic, water-soluble resin has a weight average molecular weight of 300 to 20,000.

### DETAILED DESCRIPTION OF THE INVENTION

### Ink composition

The ink composition according to the present invention may be used in recording methods using an ink composition. Recording methods using an ink composition include, for example, an ink jet recording method, a recording method using writing utensils, such as pens, and other various printing methods. Particularly preferably, the ink composition according to the present invention is used in the ink jet recording method.

Basically, the ink composition according to the present invention comprises at least an alkali-soluble colorant, a water-soluble organic solvent, water, and a cationic, water-soluble resin. The cationic, water-soluble resin referred to herein comprises a copolymer of a repeating unit represented by the following formula (I) and/or a repeating unit represented by the following formula (II) and a repeating unit containing a water-soluble group, or a mixture of a polymer, comprising a repeating unit represented by the following formula (I) and/or a repeating unit represented by the following formula (II), with a polymer comprising a repeating unit containing a water-soluble group.

In the present invention, the cationic, water-soluble resin electrostatically interacts with the colorant, and, in addition, interacts also with a recording medium, permitting the resin to be stably fixed on the recording medium. It is considered that the fixation of the resin on the recording medium permits the colorant, together with the resin, to be fixed on the recording medium, thus imparting waterproofness to the printed image. Further, an image having no significant feathering or bleeding is considered to be realized as a result of firm fixation of the colorant on the recording medium.

In the formula (I), R¹ represents a hydrogen atom or a C₁₋₃ alkyl group.

In the formula (II), R² and R³ may be the same or different and represent a hydrogen atom, a C₁₋₃ alkyl group, or a hydroxy C₁₋₃ alkyl group.

Preferred examples of a monomer as a repeating units containing a water-soluble group include: acrylamide; hydroxy esters of methacrylic acid, such as hydroxyethyl methacrylate; vinylpyrrolidone; vinyl acetate which may be hydrolyzed to give polyvinyl alcohol; acrylic acid; maleic acid; monomers having an acidic group, such as sulfur dioxide; and monomers having a basic group, such as allylamine.

According to a preferred embodiment of the present invention, the cationic, water-soluble resin comprises a copolymer of a repeating unit represented by the formula (I) and/or a repeating unit represented by the formula (II) and a monomer described above.

Further, according to a preferred embodiment of the present invention, the cationic, water-soluble resin has a molecular weight of 300 to 10,000.

According to another embodiment of the present invention, the cationic, water-soluble resin may comprise a mixture of a polymer, comprising a repeating unit represented by the following formula (I) and/or a repeating unit represented by the following formula (II), with a polymer comprising a repeating unit containing a water-soluble group.

According to a preferred embodiment of the present invention, the ink composition may contain a water-soluble resin other than the cationic, water-soluble resin. Examples of such water-soluble resins include polyacrylamide, hydroxyl esters of polymethacrylic acid, such as polyhydroxyethyl methacrylate, polyvinyl pyrrolidone, polyvinyl alcohol, and polyethylene glycol. The addition of these water-soluble resins can further stabilize the ink composition.

The cationic, water-soluble resin may be prepared by copolymerizing monomers for providing the above repeating units. Monomers which can provide repeating units represented by the formula (I) or (II) include diallylalkylamines, diallyldialkylamines, or salts thereof, for example, diallylamine, diallyldimethylamine, diallyldiethylamine, diallyldipropylamine, diallylmethylamine, and diallylmethylethylamine. Specific examples of salts thereof include: inorganic acid salts, such as hydrochloride, hydrobromide, hydroiodide, sulfate, phosphate, and nitrate; and organic acid salts, such as formate, acetate, propionate, n-butyrate, iso-butyrate, n-valerate, glycolate, gluconate, lactate, and toluenesulfonate. The anionic portion derived from these salts would generally become the counter ion represented by X⁻ in the formula (II).

The alkali-soluble colorant contained in the ink composition according to the present invention may be either a dye or a pigment. The term "alkali-soluble" used herein means "soluble in an alkaline medium." The water-soluble group contained in the molecule may be an acidic or basic dissociable group or non-dissociable functional group, or alternatively may a group containing a plurality of the above groups. Further, the colorant may be one soluble in an acidic solution so far as it is soluble in an alkali.

The content of the colorant may be suitably determined. Preferably, however, it is, for example, 0.5 to 20% by weight based on the total weight of the ink composition. When the colorant is present in the above content range, a printed image having satisfactory optical density can be realized. Further, in this case, the viscosity of the ink can be easily modified to a value suitable for ink jet recording.

More preferably, the colorant is selected from organic dyes or organic pigments because of high color density per unit weight and bright color.

Useful dyes are organic colored materials soluble in water and fall into categories of acidic dyes, direct dyes, reactive dyes, soluble vat dyes, and food dyes according to the color index. Further, colorants, insoluble in neutral water, falling within categories of oil-soluble dyes and basic dyes according to the color index may also be used so far as they are soluble in an aqueous alkali solution.

The pigment may be selected from those falling into the category of pigments according to the color index. Pigments are generally recognized as water-insoluble, organic colored materials, some of which are soluble in an alkali and usable in the present invention.

Examples of dyes and pigments usable herein include: yellow dyes and pigments, such as C.I. Acid Yellow 1, 3, 11, 17, 19, 23, 25, 29, 36, 38, 40, 42, 44, 49, 59, 61, 70, 72, 75, 76, 78, 79, 98, 99, 110, 111, 127, 131, 135, 142, 162, 164, and 165, C.I. Direct Yellow 1, 8, 11, 12, 24, 26, 27, 33, 39, 44, 50, 58, 85, 86, 87, 88, 89, 98, 110, 142, and 144, C.I. Reactive Yellow 1, 2, 3, 4, 6, 7, 11, 12, 13, 14, 15, 16, 17, 18, 22, 23, 24, 25, 26, 27, 37, and 42, C.I. Food Yellow 3 and 4, C.I. Solvent Yellow 15, 19, 21, 30, and 109, and C.I. Pigment Yellow 23; red dyes and pigments, such as C.I. Acid Red 1, 6, 8, 9, 13, 14, 18, 26, 27, 32, 35, 37, 42, 51, 52, 57, 75, 77, 80, 82, 85, 87, 88, 89, 92, 94, 97, 106, 111, 114, 115, 117, 118, 119, 129, 130, 131, 133, 134, 138, 143, 145, 154, 155, 158, 168, 180, 183, 184, 186, 194, 198, 209, 211, 215, 219, 249, 252, 254, 262, 265, 274, 282, 289, 303, 317, 320, 321, and 322, C.I. Direct Red 1, 2, 4, 9, 11, 13, 17, 20, 23, 24, 28, 31, 33, 37, 39, 44, 46, 62, 63, 75, 79, 80, 81, 83, 84, 89, 95, 99, 113, 197, 201, 218, 220, 224, 225, 226, 227, 228, 229, 230, and 231, C.I. Reactive Red 1, 2, 3, 4, 5, 6, 7, 8, 11, 12, 13, 15, 16, 17, 19, 20, 21, 22, 23, 24, 28, 29, 31, 32, 33, 34, 35, 36, 37, 38, 39, 40, 41, 42, 43, 45, 46, 49, 50, 58, 59, 63, and 64, C.I. Solubilized Red 1, C.I. Food Red 7, 9, and 14, and C.I. Pigment Red 41, 48, 54, 57, 58, 63, 68, and 81; blue dyes and pigments, such as C.I. Acid Blue 1, 7, 9, 15, 22, 23, 25, 27, 29, 40, 41, 43, 45, 54, 59, 60, 62, 72, 74, 78, 80, 82, 83, 90, 92, 93, 100, 102, 103, 104, 112, 113, 117, 120, 126, 127, 129, 130, 131, 138, 140, 142, 143, 151, 154, 158, 161, 166, 167, 168, 170, 171, 182, 183, 184, 187, 192, 199, 203, 204, 205, 229, 234, 236, and 249, C.I. Direct Blue 1, 2, 6, 15, 22, 25, 41, 71, 76, 77, 78, 80, 86, 87, 90, 98, 106, 108, 120, 123, 158, 160, 163, 165, 168, 192, 193, 194, 195, 196, 199, 200, 201, 202, 203, 207, 225, 226, 236, 237, 246, 248, and 249, C.I. Reactive Blue 1, 2, 3, 4, 5, 7, 8, 9, 13, 14, 15, 17, 18, 19, 20, 21, 25, 26, 27, 28, 29, 31, 32, 33, 34, 37, 38, 39, 40, 41, 43, 44, and 46, C.I. Solubilized Vat Blue 1, 5, and 41, C.I. Vat Blue 29, C.I. Food Blue 1 and 2, C.I. Basic Blue 9, 25, 28, 29, and 44, and C.I. Pigment Blue 1 and 17; and black dyes and pigments, such as C.I. Acid Black 1, 2, 7, 24, 26, 29, 31, 48, 50, 51, 52, 58, 60, 62, 63, 64, 67, 72, 76, 77, 94, 107, 108, 109, 110, 112, 115, 118, 119, 121, 122, 131, 132, 139, 140, 155, 156, 157, 158, 159, and 191, C.I. Direct Black 17, 19, 22, 32, 38, 51, 56, 62, 71, 74, 75, 77, 94, 105, 106, 107, 108, 112, 113, 117, 118, 132, 133, 146, 154, and 168, C.I. Reactive Black 1, 3, 4, 5, 6, 8, 9, 10, 12, 13, 14, and 18, C.I. Solubilized Vat Black 1 and C.I. Food Black 2. These colorants may be used alone as a mixture of two or more.

In the ink composition according to the present invention, water is a main solvent. Water may be pure water obtained by ion exchange, ultrafiltration, reverse osmosis, distillation or the like, or ultrapure water. Further, water, which has been sterilized by ultraviolet irradiation or by addition of hydrogen peroxide, is suitable because, when the ink composition is stored for a long period of time, it can prevent the growth of mold or bacteria.

In the ink composition according to the present invention, the water-soluble organic solvent refers to a medium having an ability to dissolve a solute and preferably selected from water-soluble solvents having a smaller vapor pressure than water. Examples thereof include: polyhydric alcohols, such as ethylene glycol, propylene glycol, butanediol, pentanediol, 2-butene-1,4-diol, 2-methyl-2,4-pentanediol, glycerin, 1,2,6-hexanetriol, diethylene glycol, and dipropylene glycol; ketones, such as acetonylacetone; esters, such as γ-butyrolactone, diacetin, and triethyl phosphate; lower alkoxy lower alcohols, such as 2-methoxyethanol and 2-ethoxyethanol; furfuryl alcohol; tetrahydrofurfuryl alcohol; and thiodiglycol. Further, solvents usable herein include not only those which are liquid at room temperature but also those which are solid at room temperature and, when heat melted, can function as a solvent, and those which, when used in combination with an aqueous solution or other solvent(s), can function as a solvent. That the vapor pressure of the organic solvent is lower than that of pure water is advantageous in that, even though drying of the ink proceeds at the front end of the ink jet head, the organic solvent can maintain the proportion thereof in the ink and hence can maintain the solvent power, enabling the ink to be stably held.

According to a preferred embodiment of the present invention, the ink composition according to the present invention may further comprise an additional organic solvent. Examples of additional solvents usable herein include imidazole, methylimidazole, hydroxyimidazole, triazole, nicotinamide, dimethylaminopyridine, ε-caprolactam, 1,3-dimethyl-2-imidazolidinone, lactamide, sulfolane, dimethylsulfoxide, 1,3-propanesultone, methyl carbamate, ethyl carbamate, 1-methylol-5,5-dimethylhydantoin, hydroxyethylpiperazine, piperazine, ethyleneurea, propyleneurea, ethylene carbonate, propylene carbonate, dimethyl sulfoxide, N-methyl-2-pyrrolidinone, 2-pyrrolidinone, acetamide, formamide, dimethylformamide, N-methylformamide, and dimethylacetamide. The addition of the above organic solvent can prevent the creation of a precipitate, for example, at the time of cooling of the ink and permits printing to be stably performed under such an environment.

If necessary, assistants commonly used in the ink for ink jet recording may be added to the ink composition according to the present invention. Examples of assistants usable herein include penetration accelerators, viscosity modifiers, surface tension modifiers, hydrotropy agents, humectants, pH adjustors, antimolds, chelating agents, preservatives, and rust preventives. When the ink is used in an ink jet recording method wherein the ink is charged, it is possible to add a specific resistance modifier selected from inorganic salts, such as lithium chloride, sodium chloride, and ammonium chloride.

Penetration accelerators usable herein include: lower alcohols, such as ethanol, isopropanol, butanol, and pentanol; cellosolves, such as ethylene glycol monobutyl ether; carbitols, such as diethylene glycol monobutyl ether, triethylene glycol monobutyl ether glycol ether; and surfactants.

Surface tension modifiers usable herein include diethanolamine, triethanolamine, alcohols, such as glycerin and diethylene glycol, and nonionic, cationic, anionic, or amphoteric surfactants.

Preferred hydrotropy agents usable herein include urea, alkylureas, ethyleneurea, propyleneurea, thiourea, guanidine acid salts, and tetraalkylammonium halides.

Humectants usable herein include glycerin and diethylene glycol which may be added also as the water-soluble organic solvent. Further humectants include saccharides, such as maltitol, sorbitol, gluconic lactone, and maltose.

pH adjustors usable herein include: inorganic bases, such as sodium hydroxide, potassium hydroxide, lithium hydroxide, and ammonia; mono-, di-, or tri-lower alkylamines, such as ethylamine, diethylamine, triethylamine, propylamine, dipropylamine, diisopropylamine, tert-butylamine, dibutylamine, diisobutylamine, isopropylamine, sec-butylamine, and pentylamine; lower alkyl lower hydroxyalkoxyamines, such as 3-ethoxypropylamine, and 3-methoxypropylamine; lower alkyl lower alkoxyamines, such as 3-ethoxypropylamine and 3-methoxypropylamine; mono-, di-, or tri-lower hydroxyalkylamines, such as 2-aminoethanol, 2-(dimethylamino)ethanol, 2-(diethylamino)ethanol, diethanolamine, N-butyldiethanolamine, triethanolamine, aminomethylpropanol, and triisopropanolamine; and organic amines, such as iminobispropylamine, 3-diethylaminopropylamine, dibutylaminopropylamine, methylaminopropylamine, dimethylaminopropanediamine, and methyliminobispropylamine.

### Ink set

The ink composition according to the present invention comprises a cationic, water-soluble resin. Use of the ink composition according to the present invention in combination with an ink composition containing an anionic material can realize an image having no significant color-to-color bleeding between two inks. It is considered that upon contact of the two ink compositions on a recording medium, the cationic, water-soluble resin contained in the ink composition according to the present invention is reacted with the anionic material to form a precipitate, inhibiting further spreading of the ink composition on the recording medium, which results in the realization of an image having no significant color-to-color bleeding.

Thus, according to another aspect of the present invention, there is provided an ink set comprising the ink composition of the present invention as a first ink composition and the ink composition containing an anionic material as a second ink composition.

The ink set generally comprises an yellow ink, a magenta ink, a cyan ink, and a black ink. According to a preferred embodiment of the present invention, the ink composition of the present invention constitutes a yellow ink, a magenta ink, and a cyan ink with the ink composition containing an anionic material constituting a black ink, or alternatively, the ink composition of the present invention constitutes a black ink with the ink composition containing an anionic material constituting a yellow ink, a magenta ink, and a cyan ink.

The second ink composition, that is, the ink composition containing an anionic material, basically comprises a colorant, a water-soluble organic solvent, water, an anionic material, and a base.

According to a preferred embodiment of the present invention, the anionic material is an anionic resin. Preferred examples of anionic resins usable herein include those which has as a functional group an anionic group, such as a sulfonic acid, carboxylic acid, phosphoric acid, or hydroxyl group, and, when combined with a base to a salt, can be made water-soluble. Specific examples thereof include: cellulose derivatives, such as carboxymethyl cellulose and viscose; naturally occurring polymers, such as alginic acid, gum arabic, tragacanth, and lignin sulfonic acid; starch derivatives, such as starch phosphate and carboxymethyl starch salts; and synthetic polymers, such as polyacrylic acid, polymethacrylic acid, polyvinylsulfuric acid, polyvinylsulfonic acid, condensed naphthalenesulfonic acid, ethylene/acrylic acid copolymer, styrene/acrylic acid copolymer, styrene/methacrylic acid copolymer, acrylic ester/acrylic acid copolymer, acrylic ester/methacrylic acid copolymer, methacrylic ester/acrylic acid copolymer, methacrylic ester/methacrylic acid copolymer, styrene/itaconic acid copolymer, itaconic ester/itaconic acid copolymer, vinylnaphthalene/acrylic acid copolymer, vinylnaphthalene/methacrylic acid copolymer, vinylnaphthalene/itaconic acid copolymer, phenolic resin and copolymers thereof.

Further, according to a preferred embodiment of the present invention, a pigment that is dispersed by using an anionic resin described above is used.

Furthermore, according to a preferred embodiment of the present invention, the anionic material is a pigment having an anionic functional group on its surface. The anionic group combines with a base to form a salt, enabling pigment particles to be dispersed in water. Anionic functional groups usable herein include, for example, sulfonic acid, carboxylic acid, and phosphoric acid groups. The pigment having an anionic functional group on its surface may be prepared by grafting the functional group onto the surface of the pigment. Commercially available pigments may be used as the pigment, and examples thereof include Microjet CW-1 and Microjet CW-2 (tradename, manufactured by Orient Chemical Industries Ltd.)

Bases usable herein include those described above as pH adjustors for the ink composition according to the present invention.

The other components of the ink composition containing an anionic material constituting the ink set according to the present invention may be basically the same as those of the ink composition according to the present invention.

### EXAMPLE

The following production examples, examples and comparative examples further illustrate the present invention but are not intended to limit it.

### Preparation 1: Synthesis of diallyldimethylamine hydrochloride/sulfur dioxide copolymer

A 1 M solution (100 ml) of diallyldimethylamine hydrochloride in dimethyl sulfoxide was mixed with 100 ml of a 1 M solution of sulfur dioxide in dimethyl sulfoxide, and 0.82 g of azobisisobutyronitrile was added as a polymerization initiator to the mixture, followed by polymerization at 40°C for 24 hr. The reaction solution was dropwise added to methanol to precipitate the resultant polymer which was then collected through a glass filter and dried under reduced pressure to give 18 g of a diallyldimethylamine hydrochloride/sulfur dioxide copolymer. The molecular weight of the copolymer was measured by gel permeation chromatography using polyethylene glycol as a standard material and found to be about 3,000.

### Preparation 2: Dehydrochlorination of diallyldimethylamine hydrochloride/sulfur dioxide copolymer

The diallyldimethylamine hydrochloride/sulfur dioxide copolymer prepared in Preparation 1 was dehydrochlorinated using an ion exchange resin (tradename: IRA900, manufactured by Organo Corp.) which had been previously ion exchanged with sodium hydroxide.

### Preparation 3: Synthesis of diallylamine hydrochloride/allylamine hydrochloride copolymer

A 50% aqueous diallylamine hydrochloride solution (100 g, 0.38 mol) was mixed with 70 g (0.38 mol) of 50% allylamine hydrochloride, and 5.6 g (0.02 mol) of azobis(2-amidinopropane) hydrochloride was added as a polymerization initiator to the mixture, followed by polymerization at 30°C for four days. The reaction solution was dropwise added to acetone to precipitate the resultant polymer which was then collected through a glass filter and dried under reduced pressure to give 83 g of a diallylamine hydrochloride/allylamine hydrochloride copolymer. The molecular weight of the copolymer was measured by gel permeation chromatography using polyethylene glycol as a standard material and found to be about 4,000.

### Preparation 4: Dehydrochlorination of diallylamine hydrochloride/allylamine hydrochloride copolymer

The diallylamine hydrochloride/allylamine hydrochloride copolymer prepared in Preparation 3 was dehydrochlorinated using an ion exchange resin (tradename: IRA900, manufactured by Organo Corp.) which has been previously ion exchanged with sodium hydroxide.

### Preparation 5: Synthesis of diallylamine hydrochloride /allylamine hydrochloride copolymer

A 50% aqueous diallylamine hydrochloride solution (100 g, 0.38 mol) was mixed with 70 g (0.38 mol) of 50% allylamine hydrochloride, and 5.6 g (0.08 mol) of azobis(2-amidinopropane) hydrochloride was added as a polymerization initiator to the mixture, followed by polymerization at 40°C for *two* days. The reaction solution was dropwise added to acetone to precipitate the resultant polymer which was then collected through a glass filter and dried under reduced pressure to give 80 g of a diallylamine hydrochloride/allylamine hydrochloride copolymer. The molecular weight of the copolymer was measured by gel permeation chromatography using polyethylene glycol as a standard material and found to be about 1,500.

### Preparation 6: Dehydrochlorination of diallylamine hydrochloride/allylamine hydrochloride copolymer

The diallylamine hydrochloride/allylamine hydrochloride copolymer prepared in Preparation 4 was dehydrochlorinated using an ion exchange resin (tradename: IRA900, manufactured by Organo Corp.) which has been previously ion exchanged with sodium hydroxide.

### Example 1

Glycerin (15 g) was dissolved as an organic solvent in 67 g of ultrapure water. Further, 3 g of Direct Fast Yellow R (tradename, manufactured by Sumitomo Chemical Co., Ltd., C.I. Direct Yellow 50) as a colorant was dissolved in the solution to prepare a dye solution. A 10% aqueous solution (15 g) of the diallyldimethylamine/sulfur dioxide copolymer as a cationic resin prepared in Preparation 2 was added to the dye solution with stirring over a period of 10 min, and the mixture was stirred for additional two hr. The mixture was then filtered through a metallic mesh filter having a pore diameter of about 5 µm to prepare an ink.

### Example 2

Diethylene glycol (20 g) was dissolved as an organic solvent in 61 g of ultrapure water. Further, 4 g of Nippon Fast Red BB (tradename, manufactured by Sumitomo Chemical Co., Ltd., C.I. Direct Red 31) was dissolved as a colorant in the solution to prepare a dye solution. A 10% aqueous solution (15 g) of the diallylamine/allylamine copolymer as a cationic resin prepared in Preparation 4 was added to the dye solution with stirring over a period of 10 min, and the mixture was stirred for additional two hr. The mixture was then filtered through a metallic mesh filter having a pore diameter of about 5 µm to prepare an ink.

### Example 3

Diethylene glycol (20 g) was dissolved as an organic solvent in 61 g of ultrapure water. Further, 4 g of Nippon Fast Red BB (tradename, manufactured by Sumitomo Chemical Co., Ltd., C.I. Direct Red 31) was dissolved as a colorant in the solution to prepare a dye solution. A 10% aqueous solution (15 g) of the diallylamine hydrochloride/allylamine hydrochloride copolymer as a cationic resin prepared in Preparation 3 was added to the dye solution with stirring, and a 50% aqueous potassium hydroxide solution was then added as a pH adjustor until the pH of the mixture became 9.5, followed by stirring for additional 2 hr. The mixture was then filtered through a metallic mesh filter having a pore diameter of about 5 µm to prepare an ink.

### Example 4

Thiodiglycol (30 g) was dissolved as an organic solvent in 57 g of ultrapure water. Further, 3 g of Kayarus Turquoise Blue GL (tradename, manufactured by Nippon Kayaku Co., Ltd., C.I. Direct Blue 86) was dissolved as a colorant in the solution to prepare a dye solution. A 10% aqueous solution (10 g) of the diallylamine/allylamine copolymer as a cationic resin prepared in Preparation 6 was added to the dye solution with stirring over a period of 10 min, and the mixture was stirred for additional two hr. The mixture was then filtered through a metallic mesh filter having a pore diameter of about 5 µm to prepare an ink.

### Example 5

Thiodiglycol (20 g) was dissolved as an organic solvent in 57 g of ultrapure water. Further, 10 g of diethylene glycol monobutyl ether was dissolved as a penetration accelerator. Kayarus Turquoise Blue GL (tradename, manufactured by Nippon Kayaku Co., Ltd., C.I. Direct Blue 86) was dissolved as a colorant in an amount of 3 g in the solution to prepare a dye solution. A 10% aqueous solution (10 g) of the diallylamine/allylamine copolymer as a cationic resin prepared in Preparation 6 was added to the dye solution with stirring over a period of 10 min, and the mixture was stirred for additional two hr. The mixture was then filtered through a metallic mesh filter having a pore diameter of about 5 µm to prepare an ink.

### Example 6

Thiodiglycol (5 g, corresponding to 5% of the whole ink) was dissolved as an organic solvent in 83.2 g of ultrapure water. Further, 1.8 g of Direct Fast Black AB (tradename, manufactured by Sumitomo Chemical Co., Ltd., C.I. Direct Black 32) was dissolved as a colorant in the solution to prepare a dye solution. A 10% aqueous solution (10 g) of the diallylamine/allylamine copolymer as a cationic resin prepared in Preparation 6 was added to the dye solution with stirring over a period of 10 min, and the mixture was stirred for additional two hr. The mixture was then filtered through a metallic mesh filter having a pore diameter of about 5 µm to prepare an ink.

### Example 7

An ink was prepared in the same manner as in Example 6, except that the amount of the ultrapure water used was 63.2 g and the amount of the thiodiglycol as the organic solvent was 25 g (corresponding to 25% of the whole ink).

### Example 8

An ink was prepared in the same manner as in Example 6, except that the amount of the ultrapure water used was 38.2 g and the amount of the thiodiglycol as the organic solvent was 50 g (corresponding to 50% of the whole ink).

### Example 9

Dimethylsulfoxide (17.5 g) as a water-soluble solvent for a polymer was dissolved in 64.5 g of ultrapure water. Further, 3 g of Kayarus Turquoise Blue GL (tradename, manufactured by Nippon Kayaku Co., Ltd., C.I. Direct Blue 86) was dissolved as a colorant in the solution to prepare a dye solution. A 10% aqueous solution (15 g) of the diallylamine/allylamine copolymer as a cationic resin prepared in Preparation 6 was added to the dye solution with stirring over a period of 10 min, and the mixture was stirred for additional two hr. The mixture was then filtered through a metallic mesh filter having a pore diameter of about 5 µm to prepare an ink.

### Example 10

An ink was prepared in the same manner as in Example 9, except that 17.5 g of imidazole was used as the water-soluble solvent for a polymer.

### Example 11

An ink was prepared in the same manner as in Example 9, except that the amount of the ultrapure water used was 57 g, the water-soluble solvent for a polymer used was 15 g of imidazole and 10 g of ethylene glycol was further added as an organic solvent.

### Example 12

Ethylene glycol (20 g) as an organic solvent was dissolved in 67 g of ultrapure water. Further, 3 g of Mikethren Soluble Blue O (tradename, manufactured by Mitsui Toatsu Chemicals, Inc., C.I. Solubilized Vat Blue 1) was dissolved as a colorant in the solution to prepare a dye solution. A 10% aqueous solution (10 g) of the diallylamine/allylamine copolymer as a cationic resin prepared in Preparation 6 was added to the dye solution with stirring over a period of 10 min, and the mixture was stirred for additional two hr. The mixture was then filtered through a metallic mesh filter having a pore diameter of about 5 µm to prepare an ink.

### Example 13

Ethylene glycol (20 g) as an organic solvent was dissolved in 67 g of ultrapure water. Further, 3 g of Sumifix Brilliant Blue R (tradename, manufactured by Sumitomo Chemical Co., Ltd., C.I. Reactive Blue 19) was dissolved as a colorant in the solution to prepare a dye solution. A 10% aqueous solution (10 g) of the diallylamine/allylamine copolymer as a cationic resin prepared in Preparation 6 was added to the dye solution with stirring over a period of 10 min, and the mixture was stirred for additional two hr. The mixture was then filtered through a metallic mesh filter having a pore diameter of about 5 µm to prepare an ink.

### Example 14

Ethylene glycol (20 g) as an organic solvent was dissolved in 61 g of ultrapure water. Further, 4 g of Food Yellow No. 5 (tradename, manufactured by Hodogaya Chemical Co., Ltd., C.I. Food Yellow 3) was dissolved as a colorant in the solution to prepare a dye solution. A 10% aqueous solution (15 g) of the diallylamine/allylamine copolymer as a cationic resin prepared in Preparation 6 was added to the dye solution with stirring over a period of 10 min, and the mixture was stirred for additional two hr. The mixture was then filtered through a metallic mesh filter having a pore diameter of about 5 µm to prepare an ink.

### Example 15

N-Methyl-2-pyrrolidinone (10 g) as a water-soluble solvent for a polymer was dissolved in 77 g of ultrapure water. Further, 3 g of Aizen Methylene Blue FZ (tradename, manufactured by Hodogaya Chemical Co., Ltd., C.I. Basic Blue 9) was dissolved as a colorant in the solution to prepare a dye solution. A 10% aqueous solution (10 g) of the diallylamine/allylamine copolymer as a cationic resin prepared in Preparation 6 was added to the dye solution with stirring over a period of 10 min, and the mixture was stirred for additional two hr. The mixture was then filtered through a metallic mesh filter having a pore diameter of about 5 µm to prepare an ink.

### Example 16

Tetrahydrofurfuryl alcohol (15 g) was dissolved as an organic solvent in 72 g of ultrapure water. Further, 3 g of Aizen Methylene Blue FZ (tradename, manufactured by Hodogaya Chemical Co., Ltd., C.I. Basic Blue 9) was dissolved as a colorant in the solution to prepare a dye solution. A 10% aqueous solution (10 g) of the diallylamine/allylamine copolymer as a cationic resin prepared in Preparation 6 was added to the dye solution with stirring over a period of 10 min, and the mixture was stirred for additional two hr. The mixture was then filtered through a metallic mesh filter having a pore diameter of about 5 µm to prepare an ink.

### Example 17

Zapon Fast Yellow CGG (tradename, manufactured by BASF, C.I. Solvent Yellow 15) (3 g) as a colorant and 0.5 g of potassium hydroxide were dissolved in a mixed solvent composed of 10 g of diethylene glycol as an organic solvent and 15 g of dimethyl sulfoxide as a water-soluble solvent for a polymer to prepare a dye solution. The whole quantity of the dye solution was added to 71.5 g of a solution of 1 g of the diallylamine hydrochloride/allylamine hydrochloride copolymer as a cationic resin, prepared in Preparation 5, dissolved in ultrapure water over a period of 10 min. The mixture was adjusted to pH 11.5 by the addition of a 50% aqueous potassium hydroxide solution and then stirred for additional 5 hr. The mixture was then filtered through a metallic mesh filter having a pore diameter of about 5 µm to prepare an ink.

### Example 18

Pink 6G (tradename, manufactured by Noma Kagaku Kogyo K.K., C.I. Pigment Red 81) (3 g) as a colorant and 0.5 g of potassium hydroxide were dissolved in a mixed solvent composed of 15 g of methoxyethanol as an organic solvent and 10 g of dimethyl sulfoxide as a water-soluble solvent for a polymer to prepare a dye solution. The whole quantity of the dye solution was added to 71.5 g of a solution of 1 g of the diallylamine hydrochloride/allylamine hydrochloride copolymer as a cationic resin, prepared in Preparation 5, dissolved in ultrapure water over a period of 10 min. The mixture was adjusted to pH 11.5 by the addition of a 50% aqueous potassium hydroxide solution and then stirred for additional 5 hr. The mixture was then filtered through a metallic mesh filter having a pore diameter of about 5 µm to prepare an ink.

### Example 19

Methoxyethanol (20 g) was dissolved as an organic solvent in 76 g of ultrapure water. Further, 3 g of Direct Fast Yellow R (tradename, manufactured by Sumitomo Chemical Co., Ltd., C.I. Direct Yellow 50) was dissolved as a colorant in the solution to prepare a dye solution. A 20% aqueous solution (1 g) of PAS-92 (tradename, manufactured by Toyobo Co., Ltd.), a diallylamine hydrochloride/sulfur dioxide copolymer as a cationic resin, was added to the dye solution with stirring over a period of 30 min. The mixture was adjusted to pH 6.5 by the addition of a 50% aqueous potassium hydroxide solution and then stirred for additional 4 hr. The mixture was then filtered through a metallic mesh filter having a pore diameter of about 5 µm to prepare an ink.

### Example 20

An ink was prepared in the same manner as in Example 19, except that the cationic resin solution was changed to 2.5 g of a 40% aqueous solution of PAS-A-5 (tradename, manufactured by Toyobo Co., Ltd.), a diallyldimethylammonium chloride/sulfur dioxide copolymer as a cationic resin.

### Example 21

An ink was prepared in the same manner as in Example 19, except that the cationic resin solution was changed to 1 g of a 35% aqueous solution of PAS-880 (tradename, manufactured by Toyobo Co., Ltd.), a diallyldimethylammonium chloride/diallylmono(2-hydroxychloropropyl)ammonium chloride as a cationic resin, and the ink was adjusted to pH 6.5 by the addition of concentrated aqueous ammonia.

### Example 22

An ink was prepared in the same manner as in Example 1, except that the cationic resin solution was changed to 1 g of a 25% aqueous solution of PAS-J-81 (tradename, manufactured by Toyobo Co., Ltd.), an acrylamide (a non-dissociable, water-soluble monomer)/diallyldimethylammonium chloride copolymer as a cationic resin, the amount of the colorant added was 1.5 g, the amount of the ultrapure water used was changed so that it was added to bring the total amount of the ink to 100 g, and the ink was adjusted to pH 7 by the addition of concentrated aqueous ammonia.

### Example 23

An ink was prepared in the same manner as in Example 3, except that the cationic resin solution was changed to 1 g of a 25% aqueous solution of PAS-J-81 (tradename, manufactured by Toyobo Co., Ltd.), an acrylamide (a non-dissociable, water-soluble monomer)/diallyldimethylammonium chloride copolymer as a cationic resin, the amount of the colorant added was 1.5 g, the amount of the ultrapure water used was changed so that the ultrapure water was added to bring the total amount of the ink to 100 g, and the ink was adjusted to pH 7 by the addition of a 50% aqueous potassium hydroxide solution.

### Example 24

An ink was prepared in the same manner as in Example 4, except that the cationic resin solution was changed to 1 g of a 25% aqueous solution of PAS-J-81 (tradename, manufactured by Toyobo Co., Ltd.), an acrylamide (a non-dissociable, water-soluble monomer)/diallyldimethylammonium chloride copolymer as a cationic resin, the amount of the colorant added was 1.5 g, the amount of the ultrapure water used was changed so that the ultrapure water was added to bring the total amount of the ink to 100 g, and the ink was adjusted to pH 7 by the addition of an aqueous potassium hydroxide solution.

### Example 25

Glycerin (10 g) as an organic solvent and 15 g of imidazole as a water-soluble solvent for a polymer were dissolved in 63.2 g of ultrapure water. Further, 1.8 g of Nigrosine NB (tradename, manufactured by Sumitomo Chemical Co., Ltd., C.I. Acid Black 2) was dissolved as a colorant in the solution to prepare a dye solution. A 10% aqueous solution (10 g) of the diallyldimethylamine/sulfur dioxide copolymer as a cationic resin prepared in Preparation 2 was added to the dye solution with stirring over a period of 10 min, and the mixture was stirred for additional two hr. The mixture was then filtered through a metallic mesh filter having a pore diameter of about 5 µm to prepare an ink.

### Example 26

An ink was prepared in the same manner as in Example 25, except that the cationic resin was changed to the diallylamine/allylamine copolymer prepared in Preparation 4.

### Example 27

An ink was prepared in the same manner as in Example 25, except that the cationic resin solution was changed to 15 g of a 10% aqueous solution of the diallylamine/allylamine copolymer as a cationic resin prepared in Preparation 6 and the amount of the ultrapure water used was 58.2 g.

### Example 28

Glycerin (10 g) as an organic solvent and 15 g of imidazole as a water-soluble solvent for a polymer were dissolved in 68.2 g of ultrapure water. Further, 1.8 g of Nigrosine NB (tradename, manufactured by Sumitomo Chemical Co., Ltd., C.I. Acid Black 2) was dissolved as a colorant in the solution to prepare a dye solution. A 24% aqueous solution (5 g) of PAS-A-1 (tradename, manufactured by Toyobo Co., Ltd., a diallyldimethylammonium chloride/sulfur dioxide copolymer) as a cationic resin was added to the dye solution with stirring over a period of 10 min, and the mixture was adjusted to pH 7.5 by the addition of a 50% aqueous potassium hydroxide solution. The mixture was stirred for additional three hr. The mixture was then filtered through a metallic mesh filter having a pore diameter of about 5 µm to prepare an ink.

### Example 29

Glycerin (10 g) as an organic solvent and 15 g of imidazole as a water-soluble solvent for a polymer were dissolved in 71.2 g of ultrapure water. Further, 1.8 g of Nigrosine NB (tradename, manufactured by Sumitomo Chemical Co., Ltd., C.I. Acid Black 2) was dissolved as a colorant in the solution to prepare a dye solution. A 25% aqueous solution (2 g) of PAS-410 (tradename, manufactured by Toyobo Co., Ltd., an amine/carboxylic acid copolymer) was added as a binder to the dye solution with stirring over a period of 10 min, and the mixture was adjusted to pH 7.5 by the addition of a 50% aqueous potassium hydroxide solution. The mixture was stirred for additional three hr. The mixture was then filtered through a metallic mesh filter having a pore diameter of about 5 µm to prepare an ink.

### Example 30

Diethylene glycol (15 g) was dissolved as an organic solvent in 73 g of ultrapure water. Further, 2 g of Direct Fast Yellow R (tradename, manufactured by Sumitomo Chemical Co., Ltd., C.I. Direct Yellow 50) was dissolved as a colorant in the solution to prepare a dye solution. An aqueous cationic resin solution (10 g) prepared by dissolving 5% of a diallylmethylamine hydrochloride polymer PAS-M-1 (tradename, manufactured by Toyobo Co., Ltd.) as a cationic resin and 5% of polyvinyl pyrrolidone K-15 (manufactured by Tokyo Chemical Industry Co., Ltd.) as a non-dissociable, water-soluble polymer in water was added to the dye solution with stirring over a period of 30 min, and the mixture was adjusted to pH 7 by the addition of a 50% aqueous potassium hydroxide solution. The mixture was stirred for additional four hr. The mixture was then filtered through a metallic mesh filter having a pore diameter of about 5 µm to prepare an ink.

### Example 31

An ink was prepared in the same manner as in Example 30, except that the cationic resin solution was changed to 15 g of an aqueous cationic resin solution prepared by dissolving 5% of a diallylmethylamine hydrochloride polymer PAS-M-1 (tradename, manufactured by Toyobo Co., Ltd.) as a cationic resin and 10% of polyvinyl pyrrolidone K-15 (manufactured by Tokyo Chemical Industry Co., Ltd.) as a non-dissociable, water-soluble polymer in water.

### Example 32

Diethylene glycol (15 g) was dissolved as an organic solvent in 73 g of ultrapure water. Further, 2 g of Nippon Fast Red BB (tradename, manufactured by Sumitomo Chemical Co., Ltd., C.I. Direct Red 31) was dissolved as a colorant in the solution to prepare a dye solution. An aqueous cationic resin solution (10 g) prepared by dissolving 5% of a diallylmethylamine hydrochloride polymer PAS-M-1 (tradename, manufactured by Toyobo Co., Ltd.) as a cationic resin and 5% of polyethylene glycol 4000 (manufactured by Kanto Chemical Co., Inc.) as a non-dissociable, water-soluble polymer in water was added to the dye solution with stirring over a period of 30 min, and the mixture was adjusted to pH 7 by the addition of a 50% aqueous potassium hydroxide solution. The mixture was stirred for additional four hr. The mixture was then filtered through a metallic mesh filter having a pore diameter of about 5 µm to prepare an ink.

### Example 33

An ink was prepared in the same manner as in Example 32, except that the cationic resin solution was changed to 15 g of an aqueous cationic resin solution prepared by dissolving 5% of a diallylmethylamine hydrochloride polymer PAS-M-1 (tradename, manufactured by Toyobo Co., Ltd.) as a cationic resin and 10% of polyethylene glycol 4000 (manufactured by Kanto Chemical Co., Inc.) as a non-dissociable, water-soluble polymer in water.

### Example 34

Glycerin (10 g) as an organic solvent, 2 g of 2-pyrrolidone, 1 g of Joncryl 679 (tradename, manufactured by Johnson Polymer Corp., a styrene/acrylic acid copolymer, Mw: 7,000, acid value: 200) as an anionic polymer, 1 g of triethanolamine and 0.2 g of sodium hydroxide as bases, and 10 g of diethylene glycol monobutyl ether as a penetration accelerator were dissolved in 72.8 g of ultrapure water. Further, 3 g of Direct Fast Black D (tradename, manufactured by Nippon Kayaku Co., Ltd., C.I. Direct Black 17) was dissolved as a colorant in the solution to prepare a dye solution. The dye solution was then filtered through a metallic mesh filter having a pore diameter of about 5 µm to prepare an ink.

### Example 35

An ink was prepared in the same manner as in Example 34, except that the colorant was changed to Direct Fast Yellow R (tradename, manufactured by Sumitomo Chemical Co., Ltd., C.I. Direct Yellow 50).

### Example 36

An ink was prepared in the same manner as in Example 34, except that the colorant was changed to Nippon Fast Red BB (tradename, manufactured by Sumitomo Chemical Co., Ltd., C.I. Direct Red 31).

### Example 37

An ink was prepared in the same manner as in Example 34, except that the colorant was changed to Kayarus Turquoise Blue GL (tradename, manufactured by Nippon Kayaku Co., Ltd., C.I. Direct Blue 86).

### Example 38

Glycerin (10 g) as an organic solvent, 2 g of 2-pyrrolidone, 0.6 g of Joncryl 679 (tradename, manufactured by Johnson Polymer Corp., a styrene/acrylic acid copolymer, Mw: 7,000, acid value: 200) as an anionic polymer, 1.3 g of triethanolamine and 0.1 g of potassium hydroxide as bases, and 0.7 g of 2-propanol as a penetration accelerator were dissolved in 82.3 g of ultrapure water. Further, 3 g of Furnace Black (C.I. Pigment Black 7) was added as a colorant to the solution, and premixing was performed for about 30 min, followed by dispersion by means of an Eiger mill (manufactured by Eiger Japan K.K.) under conditions of bead filling ratio 70% and medium diameter 0.7 mm until the average particle diameter of the pigment became 100 nm. The dispersion was then filtered through a metallic mesh filter having a pore diameter of about 5 µm to prepare a black ink containing an anionic resin.

### Example 39

An ink was prepared in the same manner as in Example 38, except that the colorant was changed to Benzidine Yellow 1316 (tradename, manufactured by Noma Kagaku Kogyo K.K., C.I. Pigment 12).

### Example 40

An ink was prepared in the same manner as in Example 38, except that the colorant was changed to Eosine Lake (tradename, manufactured by Arimoto Chemical Company Ltd., C.I. Pigment Red 90).

### Example 41

An ink was prepared in the same manner as in Example 38, except that the colorant was changed to Phthalocyanine Blue RB (tradename, manufactured by Yamamoto Chemical Inc., C.I. Pigment Blue 15).

### Example 42

Glycerin (10 g) and 10 g of diethylene glycol as organic solvents, 1.5 g of aminomethyl propanol as a base, and 10 g of diethylene glycol monobutyl ether as a penetration accelerator were dissolved in 60.5 g of ultrapure water. Further, 8 g of Microjet CW-1 (tradename, manufactured by Orient Chemical Industries, Ltd., oxidation type carbon black) was added as a colorant to the solution, and premixing was performed for about 30 min, followed by dispersion by means of an Eiger mill (manufactured by Eiger Japan K.K.) under conditions of bead filling ratio 70% and medium diameter 0.7 mm until the average particle diameter of the pigment became 75 nm. The dispersion was then filtered through a metallic mesh filter having a pore diameter of about 5 µm to prepare an anionic pigment ink.

### Comparative Example 1

An ink was prepared in the same manner as in Example 1, except that the cationic resin was changed to Epomin SP-006 (tradename, manufactured by Nippon Shokubai Kagaku Kogyo Co., Ltd.), a polyethylene-imine.

### Comparative Example 2

An ink was prepared in the same manner as in Example 29, except that the cationic resin was changed to Epomin SP-006 (tradename, manufactured by Nippon Shokubai Kagaku Kogyo Co., Ltd.), a polyethylene-imine.

### Comparative Example 3

An attempt to prepare an ink was made in the same manner as in Example 29, except that the whole quantity of the organic solvent and the solvent for a polymer was changed to ultrapure water. The addition of the binder followed by stirring for one day could not result in the dissolution of precipitates. Thus, an ink could not be prepared.

### Comparative Example 4

A cationic resin solution composed of a 10% aqueous solution of the diallylamine hydrochloride/allylamine hydrochloride copolymer prepared in Preparation 3 was prepared. The cationic resin solution was coated at a coverage of 25 g/m² onto each of Zerox-P (tradename, manufactured by Fuji Xerox Co., Ltd.) as a neutralized paper, EPP (tradename, manufactured by Seiko Epson Corporation) as an acidic plain paper, and Zerox-R (tradename, manufactured by Fuji Xerox Co., Ltd.) as a regenerated paper, followed by drying to prepare cationic resin-coated papers.

A dye solution composed of a 2% aqueous solution of Nigrosine NB (tradename, manufactured by Sumitomo Chemical Co., Ltd., C.I. Acid Black 2) was prepared.

The dye solution was loaded into a color ink jet printer MJ-5000C, and printing was performed on the cationic resin-coated papers and Zerox-P, EPP and Zerox-R not coated with the cationic resin.

### Evaluation Tests

The properties of the ink compositions prepared above were evaluated as follows.

### Evaluation 1: Waterproofness

The ink was loaded into an ink jet recording printer (a color printer MJ-5000C, manufactured by Seiko Epson Corporation), and printing was performed on Zerox-P (tradename, manufactured by Fuji Xerox Co., Ltd.) as a neutralized paper, EPP (tradename, manufactured by Seiko Epson Corporation) as an acidic plain paper, and Zerox-R (tradename, manufactured by Fuji Xerox Co., Ltd.) as a regenerated paper. After the printing, the prints were allowed to stand for one hr and then evaluated for the waterproofness according to a water spotting test set forth in JIS L 0853. The evaluation criteria were as follows.
A: A color change (a density lowering) of less than 15%
B: A color change of 15 to 30%
NG: A color change of more than 30%

### Evaluation 2: Lightfastness

Printing was performed using the same printer and printing papers as used in the evaluation 1. The prints were evaluated for the lightfastness according to a whole day method in a sunlight test set forth in JIS L 0841. The evaluation criteria were as follows.
A: A change in grade of blue scale of less than 1 as compared with the ink with the cationic resin not added thereto
B: A change in grade of blue scale of 1 or 2
NG: A change in grade of more than 2.

### Evaluation 3: Storage stability of ink

The absorbance, viscosity, and surface tension of the ink were measured. The ink was then placed in a sample bottom made of glass and allowed to stand at 60°C for one week and at -30°C for one week. At the end of this storage period, the absorbance, viscosity, and surface tension of the ink were again measured to determine a change in these properties from those before the storage. The evaluation criteria were as follows.
A: A change of less than 10% for all the three properties
B: A change of 10 to 15% for any one of the three properties
NG: A change exceeding 15% for any one of the three properties

### Evaluation 4: Clogging

The ink was loaded into a color printer MJ-5000C, and the printer with a print head removed from the home position was then allowed to stand under conditions of 40°C and 25% RH for two weeks. At the end of the standing period, the cleaning operation of the printer was executed until printing could be normally performed. Clogging was evaluated in terms of the number of cleaning operations necessary for return to the normal printing according to the following criteria.
A: 0 to 3 cleaning operations
B: 4 to 10 cleaning operations
C: Not returned even after 11 or more cleaning operations

The results are summarized in the following Table 1.

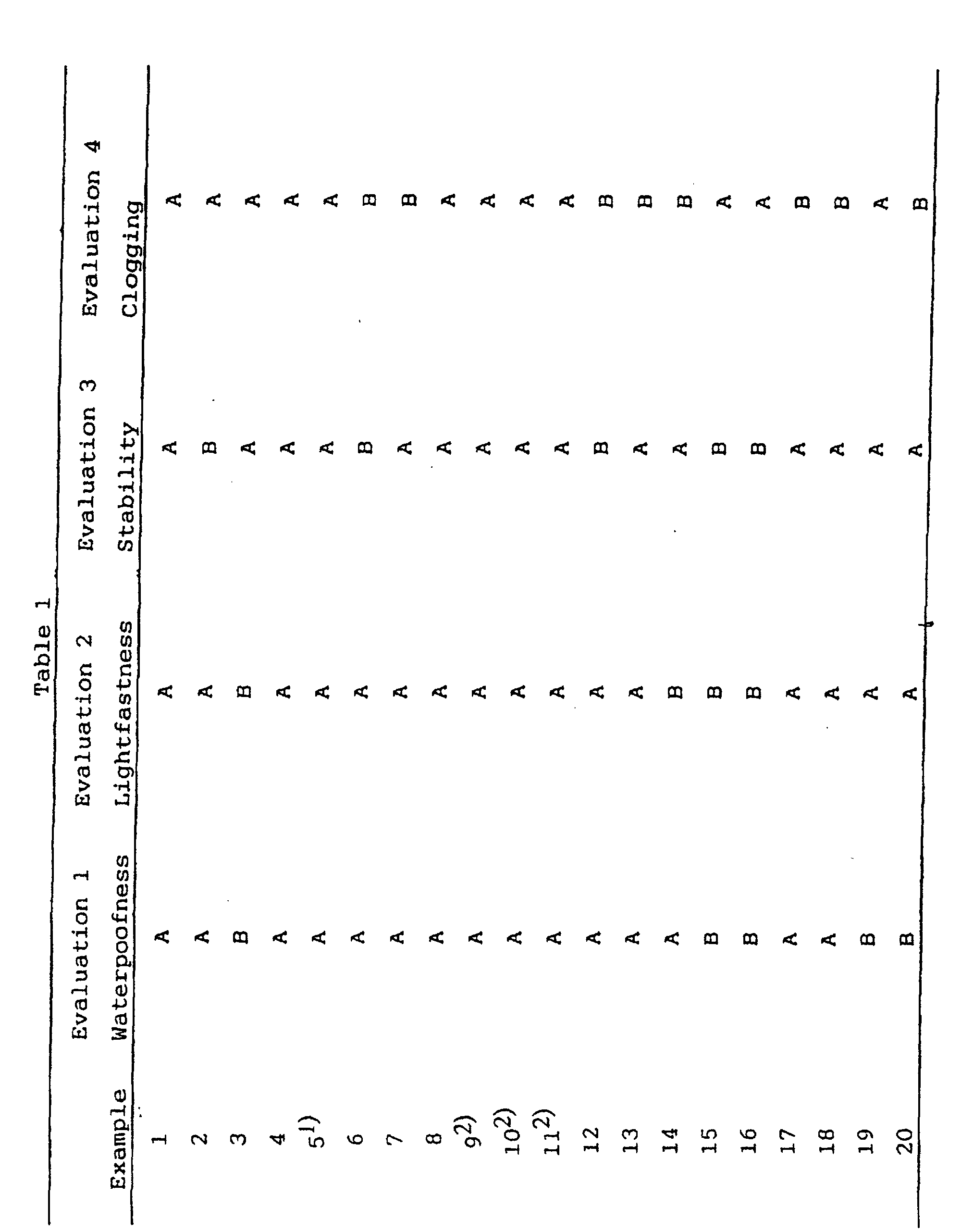

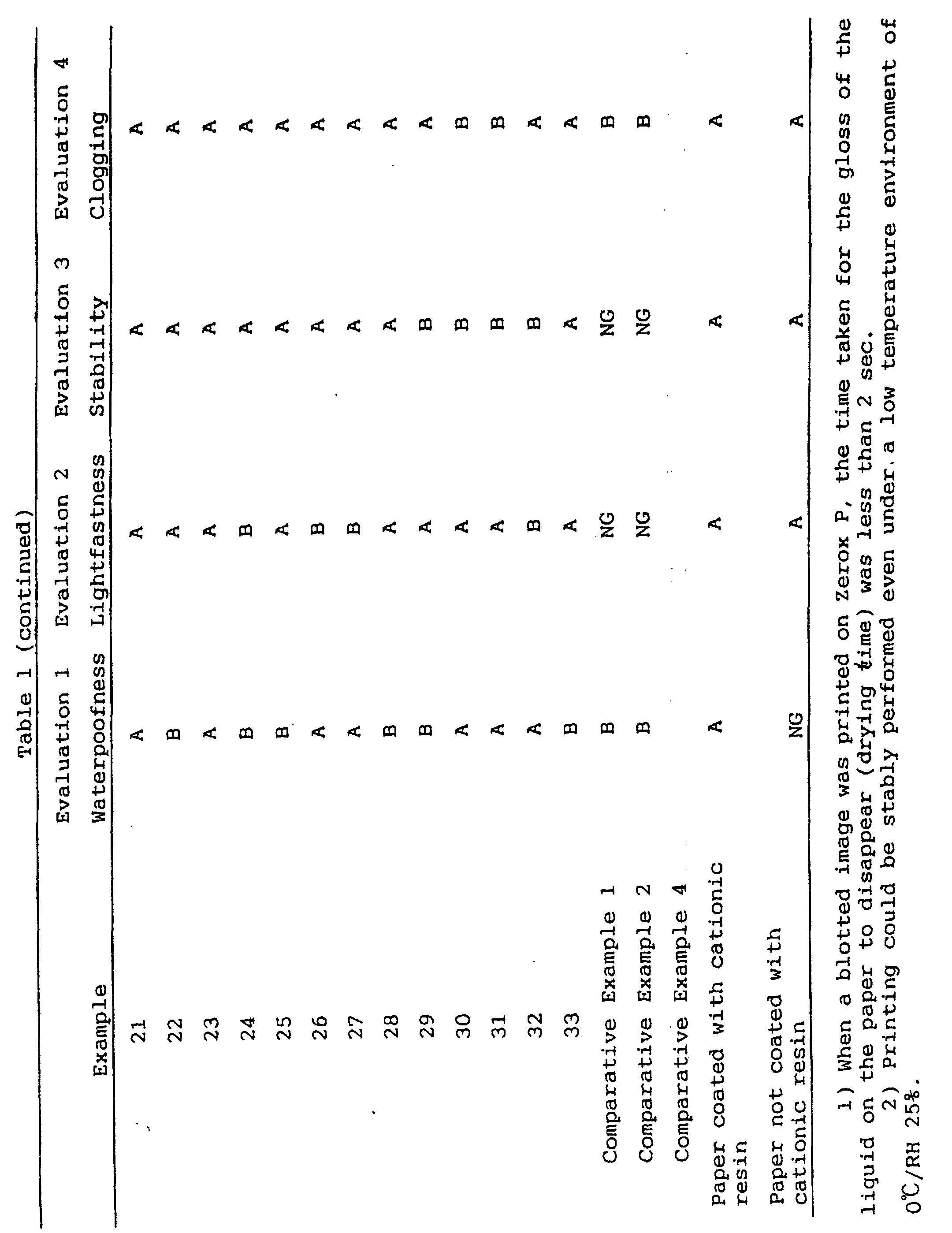

### Evaluation 5: Bleeding

The ink was loaded into a color ink jet printer MJ-5000C, and printing was performed on Zerox-P (tradename, manufactured by Fuji Xerox Co., Ltd.) as a neutralized paper, EPP (tradename, manufactured by Seiko Epson Corporation) as an acidic plain paper, and Zerox-R (tradename, manufactured by Fuji Xerox Co., Ltd.) as a regenerated paper. In this case, one dot line of the black ink was printed on a blotted image of yellow, magenta, or cyan or red, green, or blue formed by color mixing of two inks selected from yellow, magenta, and cyan. Separately, one dot line of the black was printed directly on each of the above papers without printing the blotted image. The percentage change in one dot line width was then calculated by the following equation:

Change in one dot line width: ΔW (%) = (Cw/Bw) x 100 wherein Cw represents the width of one dot line on the blotted color image formed on the paper and Bw represents the width of one dot line printed directly on the paper without forming the blotted color image. The bleeding was evaluated in terms of the percentage change in one dot line width according to the following criteria.
A: |ΔW| ≦ 5% for the black line on all the blotted color images
B: 5% < |ΔW| ≦ 10% for the black line on at least one of the blotted color images
NG: |ΔW| > 10% for the black line on at least one of the blotted color images

The following ink sets were used for the evaluation. were as follows.

**Table 2**

| | Color ink | | Black ink |
|---|---|---|---|
| Ink set 1 | | Example 5 | Example 34 |
| Ink set 2 | Yellow: | Example 35 | Example 6 |
| | Magenta: | Example 36 | |
| | Cyan: | Example 37 | |
| Ink set 3 | | Example 5 | Example 38 |
| Ink set 4 | Yellow: | Example 39 | Example 6 |
| | Magenta: | Example 40 | |
| Ink set 5 | Cyan: | Example 41 | |
| | | Example 5 | Example 42 |

The results are summarized in the following table.

**Table 3**

| Ink set | Zerox-P | EPP | Zerox-R |
|---|---|---|---|
| 1 | A | A | B |
| 2 | A | A | B |
| 3 | A | A | A |
| 4 | A | A | B |
| 5 | A | A | A |

## Claims

1. An ink composition comprising an alkali-soluble colorant dissolved in the ink composition, a water-soluble organic solvent, water, and a cationic, water-soluble resin,
the cationic, water-soluble resin comprising a copolymer comprised of a repeating unit represented by the following formula (I) and/or a repeating unit represented by the following formula (II) and a repeating unit- containing a water-soluble group, or a mixture of a polymer, comprising a repeating unit represented by the following formula (I) and/or a repeating unit represented by the following formula (II), with a polymer comprising a repeating unit containing a water-soluble group: 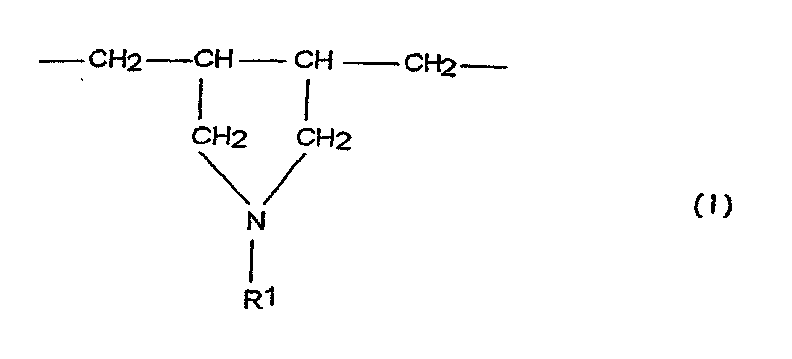 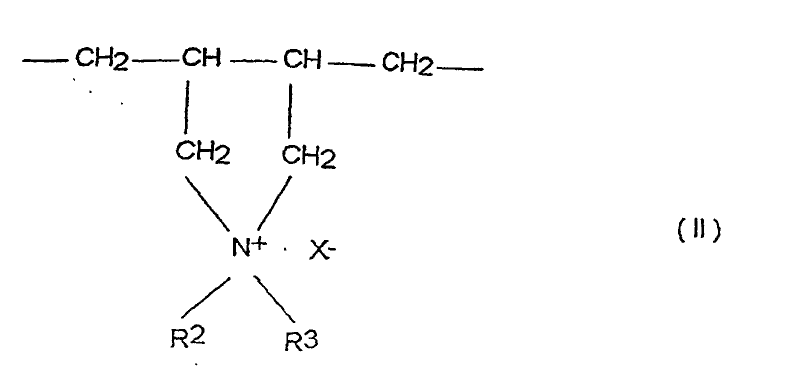 wherein
R¹ represents a hydrogen atom or a C₁₋₃ alkyl group;
R² and R³, which may be the same or different, represent a hydrogen atom, a C₁₋₃ alkyl group, or a hydroxy C₁₋₃ alkyl group; and
X⁻ represents a counter ion;
wherein the content of the water-soluble organic solvent is 5 to 50% by weight based on the ink composition and the cationic, water-soluble resin has a weight average molecular weight of 300 to 20,000.

2. The ink composition according to claim 1, wherein the water-soluble organic solvent has a lower vapor pressure than water.

3. The ink composition according to claim 1 or 2, wherein the water soluble organic solvent contains at least one of a polymer solvent.

4. The ink composition according to any one of claims 1 to 3, wherein the colorant is a dye or a pigment.

5. An ink set comprising a first ink composition or a group of first ink compositions and a second ink composition or a group of second ink compositions,
the first ink composition being the ink composition according to any one of claims 1 to 4,
the second ink composition being an ink composition comprising an anionic material.

6. The ink set according to claim 5, wherein the group of first ink compositions are a yellow ink, a magenta ink and a cyan ink and
the second ink composition is a black ink.

7. The ink set according to claim 5 wherein the first ink composition is a black ink and the second group of ink compositions are a yellow ink, a magenta ink and a cyan ink.

8. The ink set according to any one of claims 5 to 7,
wherein the anionic material contained in the second ink composition is an anionic, water-soluble resin.

9. The ink set according to claim 8, wherein the second ink composition contains a pigment.

10. The ink set according to claim 9, wherein the anionic material is a pigment having an anionic functional group on its surface.

11. A recording method comprising the step of:
depositing an ink composition onto a recording medium to conduct printing,
wherein the ink composition according to any one of claims 1 to 4 or the ink composition in the ink set according to any one of claims 5 to 10 is used as the ink composition.

12. An ink jet recording method comprising the step of
ejecting and depositing droplets of an ink composition onto a recording medium to conduct printing,
wherein the ink composition according to any one of claims 1 to 4 or the inₖ composition in the ink set according to any one of claims 5 to 10 is used as the ink composition.

13. A recording medium recorded by the method according to claim 11 or 12.

## Patentansprüche

1. Tintenzusammensetzung, umfassend ein in der Tintenzusammensetzung gelöstes alkalilösliches Farbmittel, ein wasserlösliches organisches Lösemittel, Wasser und ein kationisches, wasserlösliches Harz,
worin das kationische, wasserlösliche Harz umfasst: ein Copolymer umfassend eine Wiederholungseinheit gemäß der folgenden Formel (I) und/oder eine Wiederholungseinheit gemäß der folgenden Formel (II) und einer Wiederholungseinheit, welche eine wasserlösliche Gruppe beinhaltet, oder eine Mischung eines Polymers, umfassend eine Wiederholungseinheit gemäß der folgenden Formel (I) und/oder einer Wiederholungseinheit gemäß der folgenden Formel (II) mit einem Polymer, umfassend eine Wiederholungseinheit beinhaltend eine wasserlösliche Gruppe: 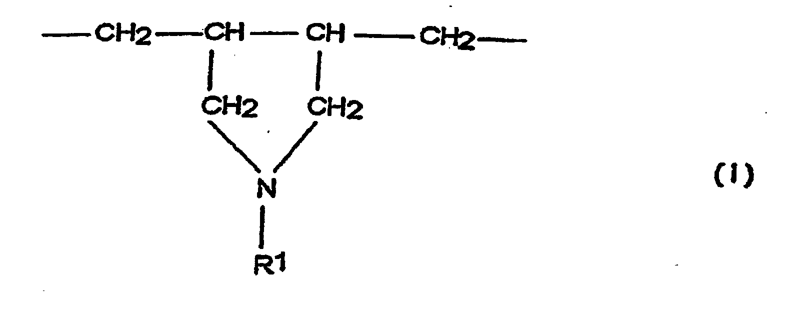 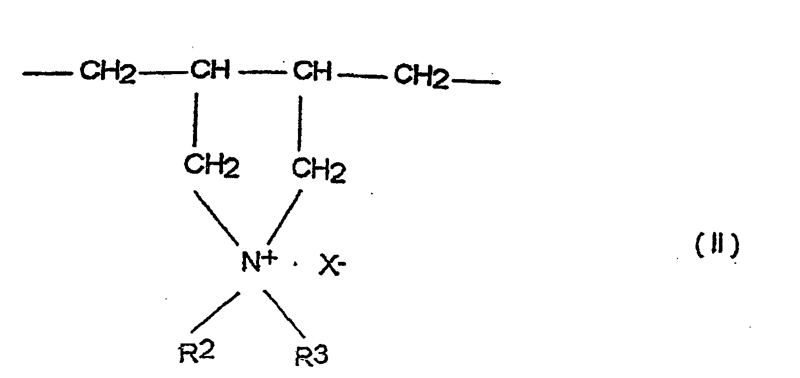 worin R¹ ein Wasserstoffatom oder eine C₁₋₃ Alkylgruppe ist;
R² und R³, welche gleich oder verschieden sein können, ein Wasserstoffatom, eine C₁₋₃ Alkylgruppe oder eine Hydroxyl C₁₋₃ Alkylgruppe sind; und
X ein Gegenion ist;
worin der Gehalt des wasserlöslichen organischen Lösemittels 5 bis 50 Gew.%, basierend auf der Tintenzusammensetzung, beträgt und das kationische, wasserlösliche Harz ein gewichtsmittleres Molekulargewicht von 300 bis 20.000 hat.

2. Tintenzusammensetzung nach Anspruch 1, worin das wasserlösliche, organische Lösungsmittel einen niedrigeren Dampfdruck als Wasser hat.

3. Tintenzusammensetzung nach Anspruch 1 oder 2, worin das wasserlösliche organische Lösemittel mindestens ein Polymerlösemittel beinhaltet.

4. Tintenzusammensetzung nach einem der Ansprüche 1 bis 3, worin das Farbmittel ein Farbstoff oder ein Pigment ist.

5. Tintensatz, umfassend eine erste Tintenzusammensetzung oder eine Gruppe von ersten Tintenzusammensetzungen und eine zweite Tintenzusammensetzung oder eine Gruppe von zweiten Tintenzusammensetzungen,
worin die erste Tintenzusammensetzung eine Tintenzusammensetzung nach einem der Ansprüche 1 bis 4 ist,
worin die zweite Tintenzusammensetzung eine Tintenzusammensetzung ist, welche ein anionisches Material umfasst.

6. Tintensatz nach Anspruch 5, worin die Gruppe der ersten Tintenzusammensetzungen eine gelbe Tinte, eine magentafarbene Tinte und eine zyanfarbene Tinte und die zweite Tintenzusammensetzung eine schwarze Tinte ist.

7. Tintensatz nach Anspruch 5, worin die erste Tintenzusammensetzung eine schwarze Tinte ist und die zweite Gruppe von Tintenzusammensetzungen eine gelbe Tinte, eine magentafarbene Tinte und eine zyanfarbene Tinte ist.

8. Tintensatz nach einem der Ansprüche 5 bis 7, worin das anionische Material, welches in der zweiten Tintenzusammensetzung enthalten ist, ein anionisches, wasserlösliches Harz ist.

9. Tintensatz nach Anspruch 8, worin die zweite Tintenzusammensetzung ein Pigment beinhaltet.

10. Tintensatz nach Anspruch 9, worin das anionische Material ein Pigment ist, welches eine anionische funktionelle Gruppe auf der Oberfläche hat.

11. Aufnahmeverfahren, umfassend die folgenden Schritte:
Auftragen einer Tintenzusammensetzung auf ein Aufnahmemedium zur Durchführung des Druckens, worin die Tintenzusammensetzung nach einem der Ansprüche 1 bis 4 oder die Tintenzusammensetzung in dem Tintensatz nach einem der Ansprüche 5 bis 10 als Tintenzusammensetzung benutzt wird.

12. Tintenstrahlaufnahmeverfahren, umfassend die folgenden Schritte;
Ausstoßen und Aufbringen von Tropfen einer Tintenzusammensetzung auf ein Aufnahmemedium zur Durchführung des Druckens, worin die Tintenzusammensetzung nach einem der Ansprüche 1 bis 4 oder die Tintenzusammensetzung in dem Tintensatz nach einem der Ansprüche 5 bis 10 als Tintenzusammensetzung benutzt wird.

13. Aufnahmemedium, aufgenommen durch das Verfahren nach einem der Ansprüche 11 oder 12.

## Revendications

1. Composition d'encre comprenant un colorant alcali-soluble dissous dans la composition d'encre, un solvant organique hydrosoluble, de l'eau et une résine cationique hydrosoluble,
la résine cationique hydrosoluble comprenant un copolymère composé d'une unité récurrente représentée par la formule (I) suivante et/ou une unité récurrente représentée par la formule (II) suivante, et une unité récurrente contenant un groupe hydrosoluble, ou un mélange d'un polymère, comprenant une unité récurrente représentée par la formule (I) suivante et/ou une unité récurrente représentée par la formule (II) suivante, avec un polymère comprenant une unité récurrente contenant un groupe hydrosoluble; 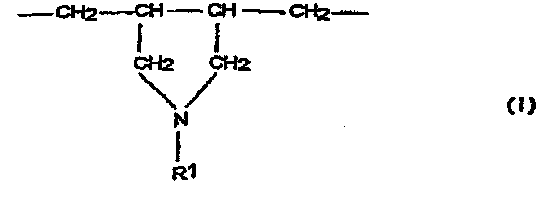 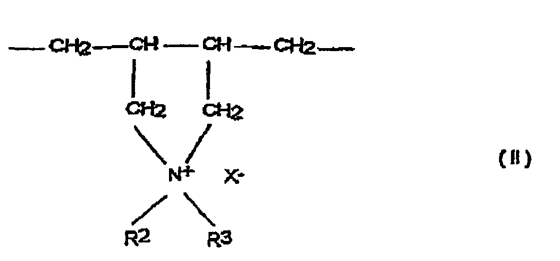 où
R¹ représente un atome d'hydrogène ou un groupe alkyle C₁₋₃;
R² et R³, qui peuvent être les mêmes ou différents, représentent un atome d'hydrogène, un groupe alkyle C₁₋₃ ou un groupe alkyle C₁₋₃ hydroxy; et
X⁻ représente un contre-ion;
où la teneur du solvant organique hydrosoluble est de 5 à 50% en poids par rapport à la composition d'encre et la résine cationique hydrosoluble a un poids moléculaire moyen de 300 à 20.000.

2. Composition d'encre selon la revendication 1, où le solvant organique hydrosoluble a une pression de vapeur plus basse que l'eau.

3. Composition d'encre selon la revendication 1 ou 2, où le solvant organique hydrosoluble contient au moins un solvant polymère,

4. Composition d'encre selon l'une quelconque des revendications 1 à 3, où le colorant est une teinture ou un pigment.

5. Ensemble d'encres comprenant une première composition d'encre ou un groupe de premières compositions d'encre et une seconde composition d'encre ou un groupe de secondes compositions d'encre,
la première composition d'encre étant la composition d'encre conforme à n'importe laquelle des revendications 1 à 4,
la seconde composition d'encre étant une composition d'encre comprenant une matière anionique.

6. Ensemble d'encres conforme à la revendication 5, où le groupe des premières compositions d'encre sont une encre jaune, une encre magenta et une encre cyan et
la seconde composition d'encre est une encre noire.

7. Ensemble d'encres conforme à la revendication 5, où la première composition d'encre est une encre noire et le second groupe de compositions d'encre est composé d'une encre jaune, une encre magenta et une encre cyan.

8. Ensemble d'encres conforme à n'importe laquelle des revendications 5 à 7,
où la matière anionique contenue dans la seconde composition d'encre est une résine anionique, hydrosoluble.

9. Ensemble d'encres conforme à la revendication 8, où la seconde composition d'encre contient un pigment.

10. Ensemble d'encres conforme à la revendication 9, où la matière anionique est un pigment ayant un groupe fonctionnel anionique sur sa surface.

11. Procédé d'enregistrement comprenant l'étape de:
déposer une composition d'encre sur un matériau d'enregistrement pour effectuer l'impression où la composition d'encre conforme à n'importe laquelle des revendications 1 à 4 ou la composition d'encre dans l'ensemble d'encres conforme à n'importe laquelle des revendications 5 à 10 est utilisée comme composition d'encre.

12. Procédé d'enregistrement par jet d'encre comprenant l'éta de:
éjecter et déposer des gouttelettes d'une composition d'encre sur un matériau d'enregistrement pour effectuer l'impression,
où la composition d'encre conforme à n'importe laquelle des revendications 1 à 4 ou la composition d'encre dans l'ensemble d'encres conforme à n'importe laquelle des revendications 5 à 10 est utilisée comme composition d'encre.

13. Matériau d'enregistrement enregistré par le procédé conforme aux revendications 11 ou 12.
